# EUROPEAN PATENT SPECIFICATION

(11) **EP 0 784 800 B1**
(45) Date of publication and mention of the grant of the patent: **31.03.2004**
(21) Application number: 95932136.5
(22) Date of filing: 05.10.1995
(51) Int. Cl.: G01R 31/36, H02J 7/00

(54) **MOTOR VEHICLE BATTERY CIRCUIT COMPRISING MONITORING OF DISCHARGE AND RECHARGE CURRENT**
KRAFTFAHRZEUGBATTERIEKREIS MIT ÜBERWACHUNG DES ENTLADE-UND LADESTROMS
CIRCUIT DE BATTERIE DE VEHICULE A MOTEUR COMPRENANT UN SYSTEME DE CONTROLE DE COURANT DE DECHARGE ET DE RECHARGE

(30) Priority: 05.10.1994 SE 9403416
(43) Date of publication of application: 23.07.1997
(73) Proprietor: INTRA DEVELOPMENT A/S, 2605 Brondby (DK)
(72) Inventor: THOMSEN, Jes, DK-2300 Copenhagen (DK)
(74) Representative: Rosenquist, Per Olof
(86) International application number: PCT/IB1995/000835
(87) International publication number: WO 1996/011817

(56) References cited:
- EP-A- 0 502 437
- WO-A-93/15935
- GB-A- 1 136 083
- GB-A- 2 144 863

## Description

### TECHNICAL FIELD

The present invention relates to a motor vehicle electrical circuit built around a storage battery for driving a starter motor, having special functions to ensure that the battery is not discharged too far and that the generator supplies a suitable recharge current.

### BACKGROUND

Motor vehicles having internal combustion engines are most often started by means of an electrically powered starter motor, which receives its powering current from a battery comprising several electrolytic battery cells. The battery is connected to the starter motor by means of a switch in an ignition lock, which is switched on at the turning of a key. During the operation of the internal combustion engine the battery is recharged by an electrical generator driven by the engine, the recharge voltage being controlled by a recharge regulator, so that a suitably high recharge voltage is obtained. At a low ambient temperature a higher recharge voltage is required than at higher temperatures and the regulator is compensated therefor to a certain degree, but cannot follow an optimal control rule. Hence, a too small recharge voltage is usually obtained at low temperatures, which results in an unsatisfying recharging of the battery. Furthermore, overcharging can occur at high ambient temperatures.

Some low-consuming devices in a car are permanently connected to the battery such as clocks, inner illumination, etc, in some cases through individual switches. The devices requiring more current, such as headlights, rear lights, car heater, etc. all have their current supply from the battery through a switch in the ignition lock and can only be activated when the ignition key is inserted and turned. However, particularly heat apparatus such as heaters for the rear window of the motor vehicle consumes considerable amounts of energy what can result in an undesired discharge of the battery so that its remaining charge capacity is insufficient to turn around the starter motor in order to start the internal combustion engine after a stop.

### STATE OF THE ART

The European patent application EP-A 0 448 755, the U.S. patents US-A 4,553,081, US-A 4,555,523 and US-A 4,289,836 all disclose batteries controlled by microprocessors.

The European patent application EP-A2 0 502 437, the British patent specification GB-A 1,136,083 and the U.S. patent US-A 3,868,559 disclose monitoring of the battery voltage, the supply from the battery to a load being cut off, if the voltage is too low.

In particular, the British patent specification GB-A 1,136,083 discloses a circuit for indicating when a battery is discharged, the circuit illuminating a lamp when the battery voltage is lower than a threshold, provided that the current drawn from the battery is not too large. Furthermore, the European patent application EP-A2 0 502 437 discloses a device for determining the charge condition of a battery in a vehicle. The determination is made by cutting of the load driven by the battery and measuring the no-load voltage of the battery. If the no-load voltage is smaller than a threshold and the generator is not generating the charging voltage of the battery, the power supply to the load is cut off until the battery voltage and the charging voltage return to acceptable values.

The British patent applications GB-A 2 144 863 and GB-A 2 261 735, the European patent applications EP-A1 0 519 460 and EP-A2 0 464 748 disclose various methods of determining the state of charge of a battery.

In particular, the British patent application GB-A 2 144 863 discloses a method of computing the state of charge for a battery in which the battery voltage and current are sensed and used in the computation.

The International patent application WO-A1 86/07502 discloses monitoring the state of battery charge. If the state of charge drops to a critical value, the vehicle electronic loads and/or the recharge cycle and charging rate can be automatically adapted. The voltage regulation may be first adapted to increase the recharging rate to compensate for excessive loading and if the charge in the battery continues to be low, load circuits may be sequentially disabled, in accordance with a set order of priority in order to ensure that adequate charge should remain for the circuits essential to the safe continued operation of the vehicle.

The German published patent application DE-A1 40 38 225 discloses a method and device for voltage control depending on the charge condition of the battery. When the load is too high, not necessary power consuming devices can be disconnected automatically. For measuring the charge condition, the output voltage of the generator can be lowered to 12 V, that is the same voltage as that of the emf of the battery, and then the battery voltage is measured.

The European patent application EP-A1 0 010 449 discloses a method of and apparatus for charging a vehicle battery where the charging voltage is set depending on the battery temperature, the charge condition as e.g. represented by the specific gravity and the electrical load. External sensors are also used in the circuits disclosed in U.S. patent US-A 4,716,355.

The European patent application EP-A2 0 273 577 discloses apparatus for and a method of indicating when the storage battery in a motor vehicle is discharging. The battery voltage during vehicle operation is monitored and compared to a stored value.

### SUMMARY

It is an object of the invention to provide a motor vehicle electrical circuit comprising a storage battery, which increases the certainty that the battery has always capacity left for driving the electrical starter motor of the motor vehicle and thereby for starting the engine of the motor vehicle.

It is a further object of the invention to provide a motor vehicle electrical circuit, comprising a generator and a battery charged by the generator, providing an optimal charging of the battery.

These objects are achieved by the invention, the features and characteristics of which being apparent from the following description and the scope of which being defined by the appended claims.

In a motor vehicle electrical circuit a battery, a recharging regulator for a generator and a starter motor are the main elements. In the battery there are cells, a controllable switch connected between two of these cells and a processor which controls the function of the switch and which communicates with a processor in the charging regulator. The processor in the battery continuously calculates the remaining capacity of the battery, partly based on present or up-to-date parameters such as the current through the battery, the battery open circuit voltage, the battery temperature obtained from a signal from a sensor, partly on an initial value obtained during the heavy discharge during the driving of the starter motor. If the capacity of the battery decreases, the current supply to less essential devices can be turned off as commanded by the battery processor. When the driving engine of the motor vehicle, an internal combustion engine, is not running the same processor can stop all current discharge from the battery in order to ensure that there is always enough capacity to drive the starter motor for starting the main engine. Furthermore, the battery processor monitors the charging of the battery from the generator and gives a command to the processor in the charging regulator to set an exciting current in a generator field coil, so that a suitable generator voltage is obtained, which gives an optimal recharge current through the battery.

Thus, in a storage battery intended primarily for motor vehicles, an internal switch is provided, which is connected for interruption of the electrical current through the battery, which normally supplies electric power to various devices. There is also a processor in the battery and electrical lines for connection of the processor to electrical terminals of the electrochemical cells the battery, where these terminals and connections are selected, so that electrical energy is supplied to the processor independently of the state of the internal switch, in particular also in its open position, when no current can pass through the battery. There are also internal lines from the processor to the internal switch for transmitting signals thereto for control of its position.

Furthermore, electrically conducting lines inside the battery are arranged for connection of the processor to electrical terminals of the cells of the battery for sensing the electrical current intensity through the battery and the electrical voltage over the battery, where these lines may be partly or completely the same as those supplying power for the operation of the processor. The processor can then determine all the time a value of the remaining charge of the battery, in particular at periodically repeated times, from values of the current intensity and the battery voltage sensed through those lines.

Electrical terminals for signalling can be provided on the battery which are electrically connected to the processor and are intended for connection through electrically conducting lines to a switch in an ignition lock, so that the processor can detect the state of the ignition lock switch, that is whether it is in a closed or opened state. There may also or alternatively be electrical signalling terminals on the battery which are connected to the processor for connection to detection means for detection of the state of a main engine, whether it is running or not. The processor controls the internal switch to an opened state, letting no current pass through the battery, in the case where the following conditions are simultaneously fulfilled: 1) the vehicle is detected to be in a nonoperative state, such as that the ignition lock switch is in an opened state, that some identity code has not been received or that the vehicle engine is not running, and 2) the value of the remaining charge as determined by the processor at the current instant is lower than a predetermined value. In other cases the internal switch is typically in a closed position, since then the capacity of the battery is sufficient for e.g. starting an engine of a motor vehicle. The processor repeatedly checks the above conditions and makes the decision accordingly.

In the conventional way, the ignition lock switch may also have an ignition state different from its other two states. The processor may then be arranged to control the internal switch to a closed state, in the case where the ignition lock switch is sensed by the *processor* to be in this ignition state. Alternatively, the processor may be arranged to control the internal switch to a closed state on receiving a correct identity code.

There may of course be provided a generator connected to the battery for recharging it, when an engine is running, driving the generator. Furthermore, the processor can have evaluation means for determining, also at repeated times, whether the battery capacity is decreasing, and it can stop the current supply to at least one electrical device when a signal from these means indicates that the capacity is decreasing. The electrical devices in a vehicle can be such which are unnecessary for the operation of the vehicle.

The switch means can be arranged, on receiving a proper signal, to periodically cut off the current supply to one or more of the electrical devices, whereas if a signal of another kind is received the current supply can be resumed. This can be carried out in such a way that, when receiving a first signal the current supply to the electrical devices is periodically cut off, so that at each instant only one device is powered by the battery, such as in a cyclic reappearing process comprising a successive connection of the devices.

### BRIEF DESCRIPTION OF THE DRAWINGS

The invention will now be described in more detail by way of a non-limiting exemplary embodiment and with reference to the accompanying drawings, in which:
Figure 1 is a circuit diagram of a motor vehicle electrical circuit built around an electrical battery,
Figure 2 is a flow diagram illustrating a method of ensuring that the battery is charged, when the engine of the motor vehicle is running,
Figure 3 is a flow diagram illustrating a method of ensuring an optimal charging of the battery,
Figure 4 is a flow diagram illustrating a method of ensuring sufficient remaining capacity in the battery during a stand still, and
Figure 5 is a flow diagram of steps carried out during a determination of the capacity of the battery.

### DETAILED DESCRIPTION

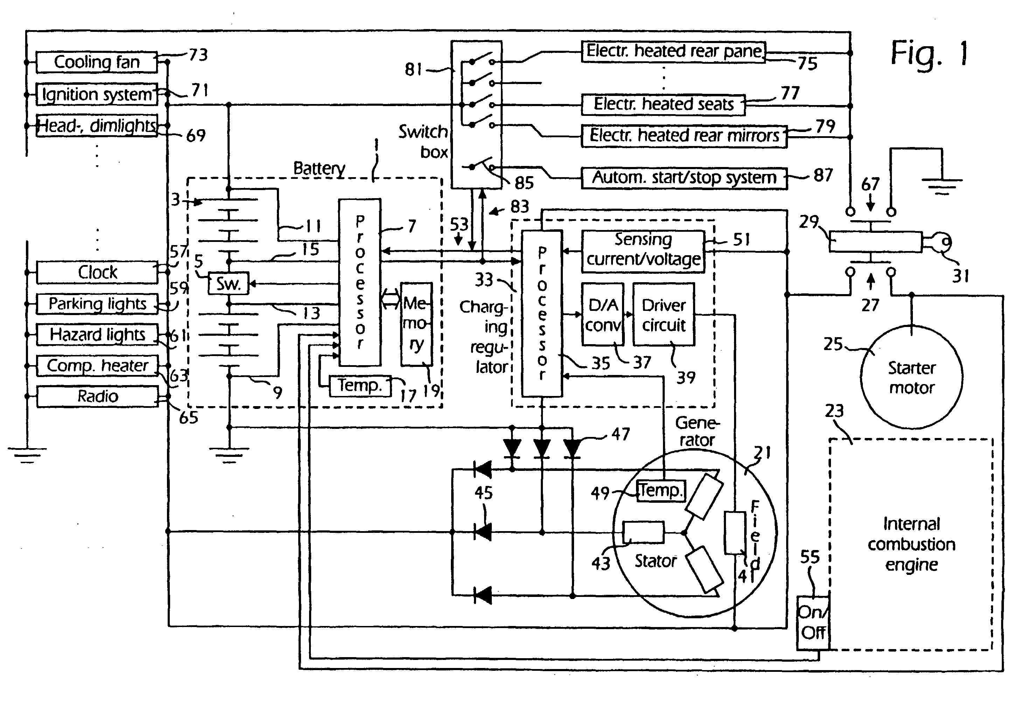

In Figure 1 a circuit diagram of a motor vehicle electrical circuit is shown, comprising a storage battery 1, which in the case shown contains six cells 3 connected in series. The negative terminal of the battery 1 is connected to ground or the framing/body of the vehicle, and at the positive terminal a positive voltage of + 12 V is then obtained for a conventional lead acid battery. Between the middle cells a switch 5 is connected, which is normally in a closed position and the function of which is controlled by a processor 7. This processor receives information on the terminal voltage of the battery 1 by being connected through electrically conducting lines 9, 11 to the terminals of the battery and on the current intensity through the battery by being connected through electrically conducting lines 13, 15 to both sides of the switch 5, which in its conductive state has a known resistance. The processor 7 also receives its current supply through these lines. The processor 7 is also connected to a temperature sensor 17 for sensing the temperature of the battery and it can further store information in a memory 19. The battery 1 is charged by a generator 21, which is connected to the positive terminal of the battery and is driven by the internal combustion engine 23 of the motor vehicle.

The main engine of the motor vehicle, the internal combustion engine 23, can be started by activating an electrical starter motor 25, which is also connected to the positive terminal of the battery 1, but through a switch 27 in an ignition lock 29, which is operated by means of an ignition key 31 inserted in the lock. From the positive terminal of the battery 1 also the other electrical devices of the motor vehicle such as illumination, clock, etc. are powered. The details described so far in the circuit are also disclosed in the earlier Swedish patent application No. 9402217-5, "Anti-theft battery", filed June 22, 1994, and the corresponding International patent application PCT/SE95/00767, "Anti-theft battery", filed June 21, 1995, which are incorporated herein by reference. As appears therefrom, the functions of the ignition lock can be replaced or supplemented with anti-theft circuits inside the battery which are arranged for wireless reception of identifying signals.

Furthermore, in the circuit a charging regulator 33 is provided connected to the generator 1 for control thereof and it is equipped with its own internal intelligence in the shape of a processor 35, which through a D/A-converter 37 and a driver circuit 39 controls the current through a field coil 41 in the generator 21, for instance the exciting current in the armature thereof, so that the generator 19 always generates a suitably adjusted charging voltage for recharging the battery 1. The charging voltage is supplied from star-connected stator windings 43 through diodes 45. These diodes 43 are at their positive terminals connected to the negative terminals of diodes 47, the other terminals of which are connected to ground. The processor 35 in the charging regulator also receives information on the temperature in the generator 21 from a temperature sensor 49, placed therein, in order to avoid that the generator 21 is operated at a too high temperature, and on the charging voltage and/or the intensity of the charging current from a sensing circuit 51, connected to the output terminal of the generator 21. The current supply to this processor 35 is provided through lines to the positive terminal of the battery 1 and to ground.

The processor of the charging regulator 33 is further connected to the processor 7 in the battery 1 through a bidirectional line 53 for serial communication, in order to allow them to exchange information. The battery processor 7 can hence get information on different generator parameters and provides signals to the processor 35 of the charging regulator 33 for adjustment of the exciting current through the field winding 41 to a suitable value. The battery processor 7 can hence obtain information whether the internal combustion engine 23 is running, either by evaluation of the charging voltage from the generator or from a special sensor 55 mounted in or at the engine 23.

The battery 1 and the generator 21 supply current to the different electrical devices of the motor vehicle. Belonging to a primary group are those which are unaffected by the position of the ignition lock 29, such as a clock 57, parking lamps 59 of the headlights, hazard warning flashers 61, a compartment heater 63, a radio 65, inner illumination, etc. These devices can discharge the battery 1, if they are turned on and the motor vehicle engine 23 is not running, so that the generator 21 does not charge. In a second group there are devices, which are vital to the operation of the motor vehicle and which are dependent on the position of the ignition lock 29 by being connected to a second switch 67 therein. This group comprises the main lamps and dimlamps 69 of the headlights, the auxiliary devices of the internal combustion engine 23, such as an ignition system 71, a cooling fan 73, a petrol pump, a wind-shield wiper motor, a wash water pump, etc. In a third group there are electrical devices, which are not necessary for the operation of the motor vehicle and which are also connected to the second switch 67 in the ignition lock 29, so that they are turned off, when this lock 29 is in a locked position. The third group comprises amongst other devices some rather energy consuming devices, such as the electrical heating of the rear window 75 of the motor vehicle, of the seats 77 and of rear view mirrors 79. The devices in the third group can further each one, separately be disconnected by being connected to a switch box 81, which is controlled by the battery processor 7 through serial communication lines 83. In the switch box 81 there is also a switch 85 for connection/disconnection of an automatic start/stop system 87, which is of a known type and is designed to stop the operation of the driving engine 23 of the motor vehicle, when a state comprising that the driving motor 23 is running in a neutral gear and the motor vehicle is standing still has lasted for a sufficiently long time.

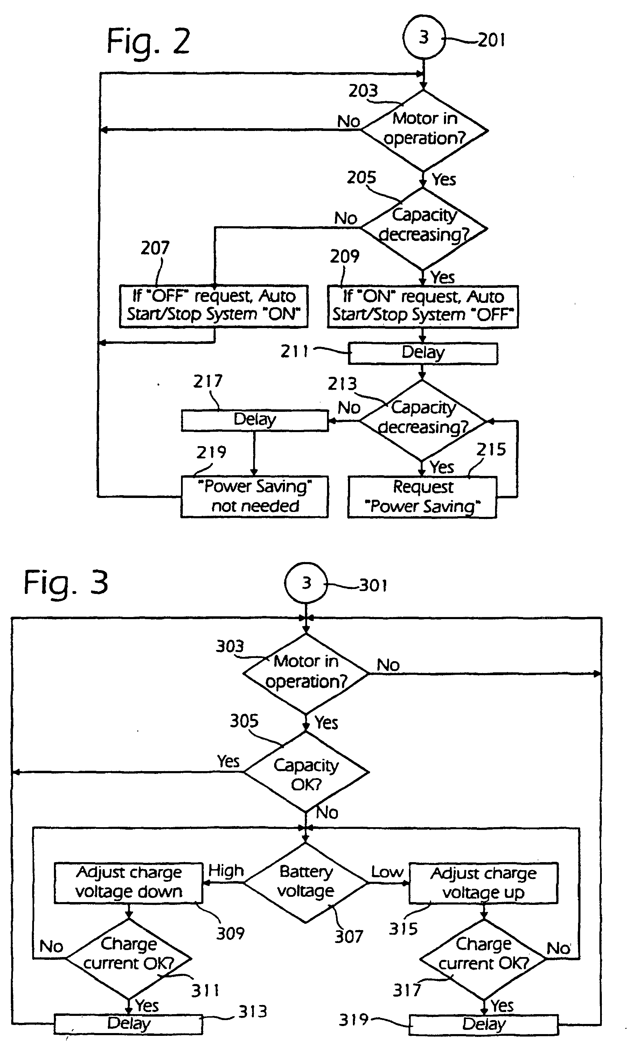

All of the time the battery processor 7 executes in parallel different procedures comprising checks of and monitoring functions of the electrical system of the vehicle and in particular of the charging and the capacity of the battery 1. Such a procedure for a check of the capacity of the battery 1, for the case when the engine of the vehicle is running, is illustrated by the flow chart of Figure 2. The procedure starts in a start block 201, whereupon it is decided in a block 203 whether the engine 21 of the vehicle is running. This is for instance determined by evaluation of the signal from the sensor 55. If the driving engine 23 of the vehicle is not running, this block 203 is executed again. If instead the engine of the motor vehicle is running, it is decided in a block 205, whether the capacity of the battery is decreasing at the moment. The capacity of the battery is continuously calculated at periodically repeated times by a procedure executed in parallel, see below, and information thereof can be accessed from a register in the memory 19. In this register several of the latest calculated values of the capacity of the battery can be stored, so that they can be compared to each other and hereby the decision in the block 205 can be performed. Alternatively, in the register can be stored the latest change value for the capacity and the sign of this change value then provides information whether the capacity decreases, increases or is constant. If the capacity is decided not to be decreasing at the current instant, the processor 7 sends a signal to the switch box 81 in block 207, that the switch 85 shall transit to a position "ON", i.e. the switch is closed, which indicates that the automatic start/stop system, in Figure 1 shown at 87, without any risk for the battery to be discharged can transit to position "ON". After this, this procedure is completed and returns to block 203.

If in the block 205 it is instead decided that the capacity of the battery 1 at the moment is decreasing, in a block 209 a signal is sent to the switch box 81, that the switch 85 shall be switched to the position "OFF", i.e. be opened in order to indicate that the automatic start/stop system 87 now shall be disconnected, since the battery now needs to be supplied with all available charging current and the engine 23 is not allowed to be stopped. Thereupon there is a delay in a block 211, i.e. the procedure waits a predetermined time, so that there is time enough for the automatic start/stop system to be turned off, if it was previously in operation, and in order for the result of this possible step to have time to affect the charging of the battery 1. The next step is a block 213, in which it is decided whether the value of the battery capacity is still decreasing, by for instance making an evaluation of the latest stored values of the battery capacity. If it is the case, a signal is sent from the battery processor 7 in a block 215 to the switch box 81 to turn off one or several of the energy demanding devices which are not entirely necessary in group 3. However, energy saving can be carried out by the advantageous method that the current supply to these different devices are multiplexed in time, so that the first device in this third group receives current during a certain, short period of time, thereafter the second device in the group during a period of time having the same length, then the third, etc. in a cyclical repeated process. This might however require additional transmission of information, namely that the processor 7 has knowledge of those devices which are connected at the moment. After the step 215 the block 213 is carried out again.

If it is decided in the block 213, that the capacity of the battery 1 now no longer decreases, the procedure is delayed in a block 217 and remains there a predetermined time, and then a signal is sent in a block 219 to the switch box 81, so that it closes one or several of the connections to the electrical devices in the third group or alternatively so that the time multiplexing of the devices can stop, i.e. that the possible particular current saving measures can entirely or partly cease. After this the procedure is ended and returns to the block 203.

In parallel to the procedure illustrated in Figure 2, the procedure of Figure 3 which is also illustrated as a flow diagram can be carried out for controlling the charging of the battery I from the generator 21 by setting the current through the field winding 41. The procedure starts in a block 301 and first it is requested in a block 303, whether the driving engine 23 of the motor vehicle is running, for instance by evaluation of the signal from the sensor 55. If the driving engine is not running, this block 303 is carried out again. If instead the motor is decided to be running, a value of the capacity of the battery 1 is as above accessed in a block 305, and it is decided whether the calculated capacity is satisfactory, i.e. exceeds a threshold value. This threshold value is here chosen instead to indicate that the battery 1 is fully charged considering the temperature at the moment, for which a value is obtained from the sensor 17, the age, type of the battery, etc. and a value of the threshold value can then be taken from a table in the memory 19. Alternatively, certain information can be accessed from such a stored table and the threshold value be calculated considering this information according to some algorithm.

If the capacity of the battery 1 is decided to be low, the voltage of the battery 1 is checked in a block 307. Here the voltage of the battery primarily refers to the present voltage existing between the terminals of the battery, when no current flows through the battery 1, also denoted the open circuit voltage. This voltage is determined by the method that the battery processor 7 continuously measures the current through the battery by an evaluation of the voltage between the two connections 15, 13 and by sending, during a short measuring period, signals to the processor 35 of the charging regulator for setting the output voltage of the generator 21 to such a value, that the measured intensity of the current through the battery will be equal to zero. The required voltage value is obtained as the voltage between the lines 11, 9 in this state.

The value of the open circuit voltage is compared to a threshold value, which is determined from suitable data for optimal charging voltage, which for instance can be taken from a table 45, stored in the memory 17 of the processor, possibly considering the discharge voltage of the battery, the temperature in the battery at the moment, given by the signal from the sensor 17, the type and age of the battery 1, etc. or as is calculated based on such data. If the value of the terminal voltage for the battery, when no current flows through it, is determined to be high, the battery processor 7 issues in a block 309 a control signal to the charging generator 33 and its processor 35 to reduce the charging voltage, which existed before the just described measurement of the battery voltage, i.e. to reduce the output voltage of the generator 21, by a suitable amount. Then a value is calculated for the charging current, i.e. the current through the battery 1, for the new adjustment of the generator 21 in a block 311 through evaluation of the voltage between the lines 15, 13. It is further decided in the block 311, whether the charging current is correct, i.e. is within a range, which is dependent on the temperature and on the present capacity or charging state, age, type of the battery, etc. and the limit values of which for instance can be taken from a table stored in the memory 19 or calculated from values therein and from information on the present temperature in the battery as obtained from the temperature sensor 17. If the charging current is correct and within the predetermined range, the procedure is delayed in a block 313, whereupon the block 303 is executed as above. If the charging current is not correct, i.e. is outside of the calculated range, the block 307 is executed again.

If it is decided in the block 307 that the determined battery voltage is low, a control signal is sent to the processor 35 of the generator 21 in a block 315, that the charging voltage shall be increased by a suitable amount, for instance the same amount being used in block 309. After this the charging current is determined and calculated in a block 317 in the same manner as in the block 311 and it is determined whether it is correct, i.e. is within the same range depending on the capacity, discharge voltage of the battery, and the temperature, age of the battery, etc, the values of which were used in the block 311. If it is the case, a delay is performed in a block 319, whereupon the block 303 is executed as above. If it was decided in the block 317, that the charging current is not correct, i.e. that its value is outside the intended range, the block 305 is executed as above.

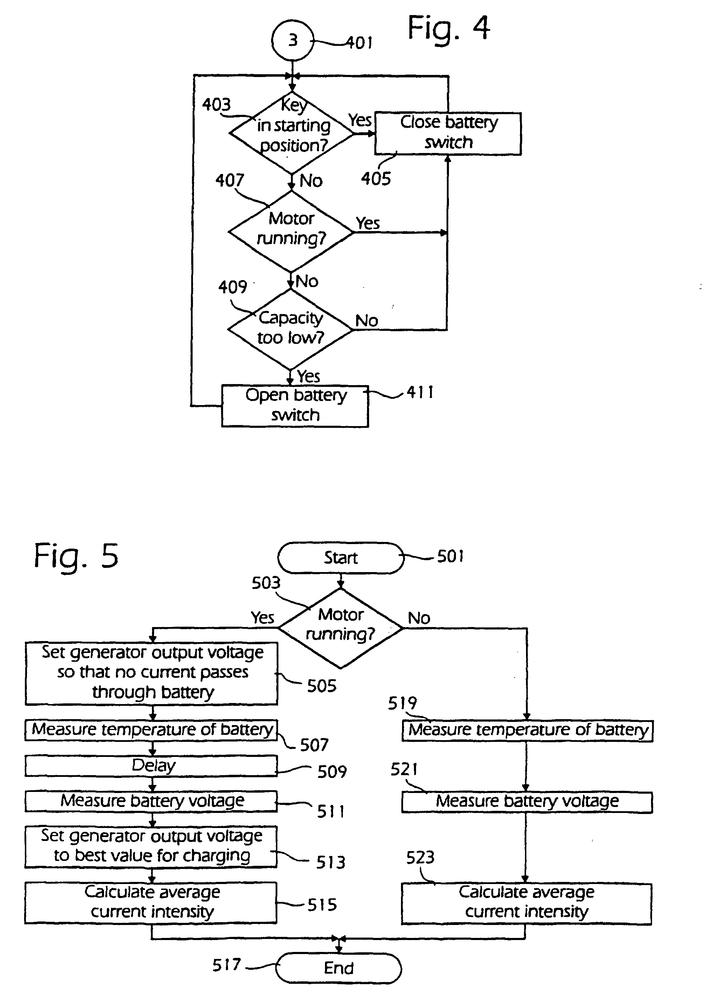

When the motor vehicle stands still and the crank shaft of the driving engine 23 does not rotate, the battery 1 is not recharged but energy can still be consumed by the devices in the first, second and third groups of electrical devices. Even if the lock 29 is turned to an entirely locked position when the ignition key 31 is removed, the devices of the first group can draw current from the battery 1 and discharge it, so that the engine of the motor vehicle can not be started by means of the starter motor 23 supplied with current from the battery 1. A procedure for monitoring the remaining capacity of the battery 1 to supply current to the starter motor 25 is shown by the flow chart of Figure 4. After a start block 401 it is determined in a block 403 whether the ignition key 31 of the motor vehicle has been turned to its position for starting the starter motor 25. This is achieved by the fact that corresponding switch 27 for the starter motor has also a terminal connected through a line to an input terminal of the battery processor 7. If the key 31 is in the starting position, the battery 1 shall of course be able to supply current therefor to the starter motor 25 and thus in a block 405 a signal is sent from the battery processor 7 to the internal switch 5 of the battery that it shall adopt a closed position, so that the current can pass through the battery. After this the step 403 is carried out again.

If it is determined in the block 403 that the ignition key 31 is not in an ignition position, it is decided in a block 407 whether the driving engine 23 of the motor vehicle is running, for instance through evaluation of the signal from the sensor 55. If it is the case there is no need for carrying out current saving measures and the procedure then executes the block 407 as above. If the driving engine 23 is not running, it is determined in block 409 whether the capacity of the battery is too low, i.e. a value of the capacity of the battery is taken from a register in the memory 19 and a threshold value is determined as above from data accessed from the memory 19 and for instance the temperature of the battery as given by the sensor 17 and these values are compared. The threshold value shall be such that it with a good margin can guarantee that at activation and with current supply from the battery 1 the starter motor 25 can turn the crank shaft of the internal combustion engine 23 around sufficiently many revolutions and sufficiently fast for the driving engine 23 to be turned on and rotate by itself. If the capacity is determined not to be too low in the block 409, the block 405 is executed as above, i.e, discharge from the battery is allowed. If the capacity is determined to be too low, all further discharge from the battery 1 is stopped in a block 411 by the method that the internal switch 5 of the battery, by a suitable control signal from the battery processor 7, is transferred to a an open position, so that no current can flow through the cells 3 of the battery. After this the procedure returns to block 403.

The procedure illustrated in the flow diagram of Figure 4 can be somewhat simplified when theft-protection is provided, as is disclosed in the cited Swedish patent application. Then it can be decided in the block 403 whether a correct identity code has been received. If it has not, what is equivalent to the fact that the ignition key has not inserted or not turned, the block 405 is executed, by e.g. evaluating the voltage supplied by the alternator 21. This modified procedure uses a minimum of extra exterior electrical lines, that is only lines to the voltage regulator 51.

The capacity of the battery 1, i.e. its capacity to supply current, can be evaluated in a known manner from the discharge voltage and the discharge current considering the temperature of the battery, the age and type of the battery, etc. The battery processor 7 continuously keeps track of the remaining capacity through calculations based on fixed values and of the physical parameters valid at the present moment. An initial value of the capacity can be obtained on those occasions, when the starter motor 25 is running and a current intensity of the order of magnitude of several hundreds of amperes is drawn from the battery 1. During a starting stage, when the generator 21 supplies only a negligible voltage, the terminal voltage of the battery 1 and the supplied current intensity are hence measured on several occasions. The measured values and the temperature as given by the temperature sensor 17 together with other data, such as the type of the battery, its age, etc. form a basis for an absolute determination of the capacity.

After such a stage with the starter motor running, the current intensity through the battery 1 is determined at frequent, repeated times. At other, less frequent periodically repeated times an amount is determined, which shall be added to the value of the capacity, which was calculated on the next previous occasion, in order to provide an up-to-date value. This amount has a positive sign, if the battery has been recharged during the time from the previous determination to the present time, and it has a negative sign if the battery has been discharged. The amount primarily depends on the current through the battery during the considered period of time from the last calculation of the capacity, where as a representative value of the current the mean value of the currents through the battery which were determined several times during the time period, can be taken, further it depends on the terminal voltage of the battery, when no current passes through the battery, and on the temperature. Other influential factors are, as above, the age, type of the battery, etc.

A state of no current flowing through the battery can be obtained by setting the output voltage from the generator 21 to a suitable value. The setting operation can be carried out using feed-back, by the method that the battery processor 7 calculates the current by means of an evaluation of the voltage over the switch 5 as above, by the generator processor 35 setting the current through the field winding 21 to a suitable value and by mutual signalling between the two processors. After a short time period in this state the voltage over the terminals of the battery can be measured by the processor 7 by means of an evaluation of the voltage between the lines 11, 9. The measured voltage value can then be used in the above described calculation of the change amount for the previous capacity value. After this voltage measurement the output voltage of the generator 21 is again set to an optimal value for the charging of the battery 1, compare Figure 3.

It is however difficult to obtain this state of no current passing through the battery 1 without disturbances to the function of powered electrical devices, when the driving engine 23 of the motor vehicle is not running and the generator 21 does not supply any voltage. A value of the terminal voltage without any current through the battery can thus not be obtained. In calculation of the change value of the capacity another algorithm must then be used, which instead of the terminal voltage of the battery for the case of no current flowing through the battery, considers the actual terminal voltage of the battery during its discharge and of course also the other parameters mentioned above.

The methods for determination of the different changing physical quantities; which are required in calculation of the capacity, are schematically illustrated by the flow chart of Figure 5. After a start block 501 the sequence to be executed is divided, by requesting in a block 503 whether the driving engine of the motor vehicle, the internal combustion engine 23, is running. If it is the case, the first sequence is carried out, which starts in a step 505 with a signal being sent from the battery processor 7 to the processor 35 in the charging regulator, that the output voltage of the generator 21, the charging voltage, shall be set in a suitable manner, so that no current passes through the battery 1. The current through the battery 1 is calculated as above by measuring the voltage over the internal switch 5 through the lines 15, 13. This substep usually requires a certain amount of time, owing to the fact that probably several adjustment commands must be given to the regulator 33, before the current through the battery 1 stops, and during the adjustment time the battery temperature is measured in a block 507. After an additional time, which is illustrated by the delay block 509, when the current through the battery has become equal to zero and the output voltage of the battery has become stable, the terminal voltage of the battery is measured in a block 511, i.e. the voltage between the lines 11, 9 is determined by the processor 7. Then the charging voltage delivered from the generator 21 is again set to a value favourable for the charging in a block 513, i.e. this is a return to the conditions which existed before the block 505 was started. The last step is that a value of the average current intensity through the battery during the time period previous to the present occasion is calculated in a block 515. Then the procedure is ended in an end block 517.

If it in the block 503 is instead decided that the engine 23 is not running, the steps in the blocks 519, 521 and 523 are performed in which the same determinations/calculations are made as in the blocks 507, 511 and 515 respectively. After these steps the alternative sequence ends in the end block 517.

## Claims

1. A motor vehicle storage battery (1) for supply of power to electrical devices (75 - 79), the battery comprising
- an internal switch (5) connected for interruption of the electrical current through the battery,
- a processor (7),
- electrical lines in the battery for connection of the processor (7) to
- - electrical terminals of the battery for supplying electrical energy to the processor independently of the state of the internal switch, and
- - the internal switch (5) for controlling it,
**characterized by** electrical lines (13, 15; 9, 11) in the battery for connection of the processor (7) to electrical terminals of the battery for sensing the electrical current intensity through the battery and the electrical voltage over the battery,
- the processor (7) arranged to determine all the time a value of the remaining charge of the battery, at periodically repeated times, from sensed values of the current intensity and the battery voltage,
- the processor (7) further arranged to control the internal switch (5) to an opened state in the case where
- - the vehicle is in a nonoperative state, and simultaneously
- - the value of the remaining charge of the battery is lower than a predetermined value.

2. A battery (1) comprising cells (3) according to claim 1, **characterized in that** the internal switch (5) is connected between middle ones of the cells.

3. A battery (1) according to any of claims 1 - 2, **characterized in that** the processor (7) is connected through electrically conducting lines (13, 15) to both sides of the internal switch (5) to sense information on the current intensity through the battery, the internal switching having in its conductive state a known resistance.

4. A battery (1) according to any of claims 1 - 2, **characterized in**
- **that** the processor (7) comprises means for detection of the state of a main engine (23) including whether it is running or not, and
- **that** the vehicle is determined to be in a nonoperative state in the case where the main engine is detected not to be in a running state.

5. A battery (1) according to claim 4, **characterized by** electrical terminals on the battery connected to the processor (7) and intended for connection to a detector (55) for detection of the state of the main engine (23).

6. A battery (1) according to any of claims 1 - 5, **characterized by** electrical terminals on the battery connected to the processor (7) and intended for connection to an ignition lock switch (67), the processor arranged to sense the state of the ignition lock switch, the states of the ignition lock comprising whether it is in a closed or opened state, and the vehicle being determined to be in a nonoperative state in the case where the ignition lock switch is sensed to be in an opened state.

7. A battery (1) according to any of claims 1 - 6, **characterized in**
- **that** the processor is arranged to sense an ignition state of an ignition lock switch (27), and
- **that** the processor is arranged to control the internal switch to a closed state in the case where the ignition lock switch is sensed to be in the ignition state.

8. An electrical circuit for a motor vehicle comprising
- a storage battery (1) according to any of claims 1 -7. and
- electrical devices (75 - 79) connected to be powered from the battery.

9. An electrical circuit for a motor vehicle comprising a main engine (23) according to claim 8, **characterized by** electrically conducting lines from the processor (7) of the storage battary to a detector (55) for detection of the state of the main engine (23).

10. An electrical circuit for a motor vehicle comprising a main engine (23) according to any of claims 8 - 9, **characterized by**
- an ignition lock switch (67) for ignition of the main engine, the ignition lock switch having at least two states including a closed and an opened state, and
- electrical lines from the storage battery (1) that interconnect the processor (7) of the storage battery and the ignition lock switch,
the processor (7) of the storage battery arranged to sense the state of the ignition lock switch including whether it is in a closed or opened state, the condition of the motor vehicle being in a nonoperative state being taken as the case where the ignition lock switch is sensed to be in an opened state.

11. A circuit for a motor vehicle comprising a main engine (23) according to any of claims 8 - 9, **characterized by**
- an ignition lock switch (27), the ignition lock switch having an ignition state for ignition of the main engine,
- electrical lines from the storage battery (1) that interconnect the processor (7) of the storage battery and the ignition lock switch,
the processor (7) of the storage battery arranged to:
- sense the ignition state of the ignition lock switch, and
- to control the internal switch (5) to a closed state in the case where the ignition lock switch is sensed to be in the ignition state.

## Patentansprüche

1. Motorfahrzeug-Akkumulatorbatterie (1) zur Stromversorgung elektrischer Vorrichtungen (75-79), wobei die Batterie umfasst:
- einen internen Schalter (5), der zur Unterbrechung des elektrischen Stroms durch die Batterie geschaltet ist,
- einen Prozessor (7),
- elektrische Leitungen in der Batterie zur Verbindung des Prozessors (7) mit
- elektrischen Anschlüssen der Batterie zur Zufuhr von elektrischer Energie zu dem Prozessor unabhängig vom Zustand des internen Schalters, und
- dem internen Schalter (5) zur Steuerung desselben,
**gekennzeichnet durch** elektrische Leitungen (13, 15; 9, 11) in der Batterie zur Verbindung des Prozessors (7) mit elektrischen Anschlüssen der Batterie, um die Stärke des elektrischen Stroms **durch** die Batterie und die elektrische Spannung über die Batterie zu erfassen,
- wobei der Prozessor (7) so eingerichtet ist, dass er permanent einen Wert der Restladung der Batterie zur periodisch wiederholten Zeitpunkten anhand von Messwerten der Stromstärke und der Batteriespannung bestimmt,
- der Prozessor (7) des Weiteren so eingerichtet ist, dass er den internen Schalter (5) in einen geöffneten Zustand versetzt, wenn:
- sich das Fahrzeug in einem Ruhezustand befindet, und gleichzeitig
- der Wert der Restladung der Batterie unter einem vorgegebenen Wert liegt.

2. Batterie (1), die Zellen (3) nach Anspruch 1 umfasst, **dadurch gekennzeichnet, dass** der interne Schalter (5) zwischen mittlere der Zellen geschaltet ist.

3. Batterie (1) nach einem der Ansprüche 1-2, **dadurch gekennzeichnet, dass** der Prozessor (7) über elektrisch leitende Leitungen (13, 15) mit beiden Seiten des internen Schalters (5) verbunden ist, um Informationen über die Stromstärke durch die Batterie zu erfassen, wobei der interne Schalter in seinem leitenden Zustand einen bekannten Widerstand hat.

4. Batterie (1) nach einem der Ansprüche 1-2, **dadurch gekennzeichnet, dass** der Prozessor (7) eine Einrichtung umfasst, die den Zustand eines Hauptmotors (23) einschließlich der Tatsache feststellt, ober läuft oder nicht, und
- dass bestimmt wird, dass sich das Fahrzeug in einem Ruhezustand befindet, wenn festgestellt wird, dass sich der Hauptmotor nicht in einem Laufzustand befindet.

5. Batterie (1) nach Anspruch 4, **gekennzeichnet durch** elektrische Anschlüsse an der Batterie, die mit dem Prozessor (7) verbunden sind und für die Verbindung mit einem Detektor (55) zum Erfassen des Zustandes eines Hauptmotors (23) bestimmt sind.

6. Batterie (1) nach einem der Ansprüche 1-5, **gekennzeichnet durch** elektrische Anschlüsse an der Batterie, die mit dem Prozessor (7) verbunden sind und zur Verbindung mit einem Zündschlossschalter (67) bestimmt sind, wobei der Prozessor so eingerichtet ist, dass er den Zustand des Zündschlossschalters erfasst, wobei die Zustände des Zündschlosses umfassen, ob es sich in einem geschlossenen oder geöffneten Zustand befindet, und bestimmt wird, dass sich das Fahrzeug in einem Ruhezustand befindet, wenn erfasst wird, dass sich der Zündschlossschalter in einem geöffneten Zustand befindet.

7. Batterie (1) nach einem der Ansprüche 1-6, **dadurch gekennzeichnet,**
- **dass** der Prozessor so eingerichtet ist, dass er einen Zündzustand eines Zündschlossschalters (27) erfasst, und
- **dass** der Prozessor so eingerichtet ist, dass er den internen Schalter in einen geschlossenen Zustand versetzt, wenn erfasst wird, dass sich der Zündschlossschalter in dem Zündzustand befindet.

8. Elektrische Schaltung für ein Motorfahrzeug, die umfasst:
- eine Akkumulatorbatterie (1) nach einem der Ansprüche 1-7, und
- elektrische Vorrichtungen (75-79), die so geschaltet sind, dass sie von der Batterie mit Strom versorgt werden.

9. Elektrische Schaltung für ein Motorfahrzeug, das einen Hauptmotor (23) enthält, nach Anspruch 8, **gekennzeichnet durch** elektrisch leitende Leitungen von dem Prozessor (7) der Akkumulatorbatterie zu einem Detektor (55) zum Feststellen des Zustandes des Hauptmotors (23).

10. Elektrische Schaltung für ein Motorfahrzeug, das einen Hauptmotor (23) umfasst, nach einem der Ansprüche 8-9, **gekennzeichnet durch**:
- einen Zündschlossschalter (67) zum Zünden des Hauptmotors, wobei der Zündschlossschalter wenigstens zwei Zustände einschließlich eines geschlossenen und eines geöffneten Zustandes hat, und
- elektrische Leitungen von der Akkumulatorbatterie (1), die den Prozessor (7) der Akkumulatorbatterie und dem Zündschlossschalter miteinander verbinden,
wobei der Prozessor (7) der Speicherbatterie so eingerichtet ist, dass er den Zustand des Zündschlossschalters einschließlich der Tatsache erfasst, ob er sich in einem geschlossenen oder geöffneten Zustand befindet, wobei der Zustand, in dem sich das Motorfahrzeug in einem Ruhezustand befindet, als der Fall angenommen wird, in dem erfasst wird, dass sich der Zündschlossschalter in einem geöffneten Zustand befindet.

11. Elektrische Schaltung für ein Motorfahrzeug, das einen Hauptmotor (23) umfasst, nach einem der Ansprüche 8-9, **gekennzeichnet durch**:
- einen Zündschlossschalter (27), wobei der Zündschlossschalter einen Zündzustand zum Zünden des Hauptmotors hat,
- elektrische Leitungen von der Akkumulatorbatterie (1), die den Prozessor (7) der Akkumulatorbatterie und den Zündschlossschalter miteinander verbinden;
wobei der Prozessor (7) der Speicherbatterie so eingerichtet ist, dass er:
- den Zündzustand des Zündschlossschalters erfasst, und
- den internen Schalter (5) in einen geschlossenen Zustand versetzt, wenn erfasst wird, dass sich der Zündschlossschalter in dem Zündzustand befindet.

## Revendications

1. Batterie de stockage pour véhicule à moteur (1) destinée à fournir de l'énergie à des dispositifs électriques (75 à 79), la batterie comprenant :
- un commutateur interne (5) branché en vue de l'interruption du courant électrique dans la batterie,
- un processeur (7),
- des lignes électriques dans la batterie en vue d'une connexion du processeur (7)
- - à des bornes électriques de la batterie afin de fournir l'énergie électrique au processeur indépendamment de l'état du commutateur interne, et
- - au commutateur interne (5) afin de le commander,
**caractérisée par** des lignes électriques (13, 15 ; 9, 11) dans la batterie en vue de la connexion du processeur (7) aux bornes électriques de la batterie afin de détecter l'intensité du courant électrique dans la batterie et la tension électrique sur la batterie,
- le processeur (7) étant agencé pour déterminer tout le temps une valeur de la charge restante de la batterie à des instants répétés périodiquement, à partir des valeurs détectées de l'intensité du courant et de la tension de batterie,
- le processeur (7) étant en outre agencé pour commander le commutateur interne (5) vers un état ouvert dans le cas où
- - le véhicule est dans un état de non fonctionnement, et simultanément,
- - la valeur de la charge restante de la batterie est inférieure à une valeur prédéterminée.

2. Batterie (1) comprenant des éléments de batterie (3) selon la revendication 1, **caractérisée en ce que** le commutateur interne (5) est relié entre des éléments médians parmi les éléments de batterie.

3. Batterie (1) selon l'une quelconque des revendications 1 et 2, **caractérisée en ce que** le processeur (7) est relié par l'intermédiaire de lignes conductrices électriques (13, 15) aux deux côtés du commutateur interne (5) afin de détecter des informations sur l'intensité du courant dans la batterie, le commutateur interne présentant, dans son état conducteur, une valeur ohmique connue.

4. Batterie (1) selon l'une quelconque des revendications 1 et 2, **caractérisée**
- **en ce que** le processeur (7) comprend un moyen de détection de l'état d'un moteur thermique principal (23) incluant le fait qu'il fonctionne ou non, et
- **en ce que** le véhicule est déterminé être dans un état de non fonctionnement dans le cas où le moteur thermique principal est détecté ne pas être dans un état de fonctionnement.

5. Batterie (1) selon la revendication 4, **caractérisée par** des bornes électriques sur la batterie reliées au processeur (7) et destinées à une connexion à un détecteur (55) en vue d'une détection de l'état du moteur thermique principal (23).

6. Batterie (1) selon l'une quelconque des revendications 1 à 5, **caractérisée par** des bornes électriques sur la batterie reliées au processeur (7) et destinées à une connexion vers un commutateur de serrure de contact (67), le processeur étant agencé pour détecter l'état du commutateur de serrure de contact, les états de la serrure de contact comprenant le fait qu'elle se trouve dans un état fermé ou ouvert, et le véhicule étant déterminé être dans un état de non fonctionnement dans le cas où le commutateur de serrure de contact est détecté être dans un état ouvert.

7. Batterie (1) selon l'une quelconque des revendications 1 à 6, **caractérisée**
- **en ce que** le processeur est agencé pour détecter un état de mise du contact d'un commutateur de serrure de contact (27), et
- **en ce que** le processeur est agencé pour commander le commutateur interne vers un état fermé dans le cas où le commutateur de serrure de contact est détecté être dans l'état de mise du contact.

8. Circuit électrique destiné à un véhicule à moteur comprenant
- une batterie de stockage (1) selon l'une quelconque des revendications 1 à 7 et
- des dispositifs électriques (75 à 79) reliés pour être alimentés à partir de la batterie.

9. Circuit électrique destiné à un véhicule à moteur comprenant un moteur thermique principal (23) conforme à la revendication 8, **caractérisé par** des lignes électriquement conductrices depuis le processeur (7) de la batterie de stockage vers un détecteur (55) en vue de la détection de l'état du moteur thermique principal (23).

10. Circuit électrique destiné à un véhicule à moteur comprenant un moteur thermique principal (23) conforme à l'une quelconque des revendications 8 à 9, **caractérisé par**
- un commutateur de serrure de contact (67) en vue de l'allumage du moteur thermique principal, le commutateur de serrure de contact comportant au moins deux états comprenant un état fermé et un état ouvert, et
- des lignes électriques provenant de la batterie de stockage (1) qui relient le processeur (7) de la batterie de stockage et le commutateur de serrure de contact,
le processeur (7) de la batterie de stockage étant agencé pour détecter l'état du commutateur de serrure de contact y compris le fait qu'il se trouve dans un état fermé ou ouvert, l'état selon lequel le véhicule à moteur est dans un état de non fonctionnement étant considéré comme le cas où le commutateur de serrure de contact est détecté se trouver dans un état ouvert.

11. Circuit destiné à un véhicule à moteur comprenant un moteur thermique principal (23), conforme à l'une quelconque des revendications 8 à 9, **caractérisé par**
- un commutateur de serrure de contact (27), le commutateur de serrure de contact présentant un état de mise du contact en vue de l'allumage du moteur thermique principal,
- des lignes électriques depuis la batterie de stockage (1) qui relient le processeur (7) de la batterie de stockage et le commutateur de serrure de contact,
le processeur (7) de la batterie de stockage agencé pour :
- détecter l'état de mise du contact du commutateur de serrure de contact, et
- commander le commutateur interne (5) vers un état fermé dans le cas où le commutateur de serrure de contact est détecté être dans l'état de mise du contact.
